# EUROPÄISCHE PATENTANMELDUNG

(11) **EP 4 339 082 A1**
(43) Veröffentlichungstag der Anmeldung: **20.03.2024**
(21) Anmeldenummer: 23192843.3
(22) Anmeldetag: 23.08.2023
(51) Int. Cl.: B62J 9/21, B62J 9/27, B62K 21/02

(54) **FAHRRADGABEL-HALTESYSTEM**

(30) Priorität: 31.08.2022 DE 202022104927 U
(71) Anmelder: Canyon Bicycles GmbH, 56073 Koblenz (DE)
(72) Erfinder: Schackers, Kai, 56299 Ochtendung (DE); Eurich, Matthias, 56070 Koblenz (DE); Hensolt, Matthias, 56076 Koblenz (DE)
(74) Vertreter: dompatent von Kreisler Selting Werner - Partnerschaft von Patent- und Rechtsanwälten mbB

(57) **Zusammenfassung**

Ein Fahrradgabel-Haltesystem zum Befestigen von Gepäckstücken an einer Fahrradgabel weist eine Halteeinrichtung 14 auf. Die Halteeinrichtung 14 für Gepäckstücke ist mit einem Gabelbein 10 verbindbar. Neben einer insbesondere klemmenden Verbindung mit Hilfe von Klemmelementen 26 ist ein Verbindungselement (20, 22) zum formschlüssigen Verbinden der Halteeinrichtung (14) mit dem Gabelbein (10) vorgesehen.

## Beschreibung

Die Erfindung betrifft ein Fahrradgabel-Haltesystem zur Befestigung von Gepäckstücken, wie Gepäcktaschen, Getränkeflaschen und dergleichen an einer Fahrradgabel.

Zur Befestigung von Gepäckstücken an einer Fahrradgabel, insbesondere an einem Gabelbein der Fahrradgabel ist es bekannt, in dem Gabelbein, das auch als Gabelholm bezeichnet wird, Gewindehülsen vorzusehen. Hierbei sind üblicherweise drei Gewindehülsen in Längsrichtung des Gabelbeins übereinander vorgesehen. Mit Schrauben können in den Gewindehülsen Halterungen für Gepäckstücke, wie Gepäcktaschen oder Halterungen zur Aufnahme von Getränkeflaschen oder dergleichen vorgesehen sein. Das Vorsehen von Gewindehülsen in Gabelbeinen stellt bei der Herstellung der häufig aus Karbonfasern hergestellten Fahrradgabeln einen aufwendigen Arbeitsschritt dar, da die entsprechenden Gewindehülsen bereits bei der Herstellung der Fahrradgabeln exakt positioniert werden müssen. Ferner erhöht sich hierdurch das Gewicht der Fahrradgabel. Dies ist insbesondere bei Rennrädern, Gravel-Rädern und dergleichen nicht erwünscht, da entsprechende Halterungen für Gepäckstücke nicht ununterbrochen, sondern nur bei entsprechenden Fahrradtouren genutzt werden. Häufig werden derartige Gepäckstücke vom Benutzer gar nicht montiert, sodass das Vorsehen der entsprechenden Gewindehülsen für viele Nutzer keinen Vorteil hat. Ferner erhöht sich durch das Vorsehen von Gewindehülsen in den Gabelbeinen die Steifigkeit der Gabel. Dies ist insbesondere bei Gravel-Fahrrädern, bei denen die Fahrradgabel zur Dämpfung der unebenen Fahrbahn eine gewisse Flexibilität aufweisen soll, unerwünscht. Ferner sind derartige Gewindehülsen, insbesondere wenn keine Gepäckstücke befestigt werden, optisch nachteilig. Aufgabe der Erfindung ist es, ein Fahrradgabel-Haltesystem zur Befestigung von Gepäckstücken zu schaffen, für das das Vorsehen von Gewindehülsen nicht unbedingt erforderlich ist.

Die Lösung der Aufgabe erfolgt erfindungsgemäß durch ein Fahrradgabel-Haltesystem mit dem Merkmal des Anspruchs 1.

Das erfindungsgemäße Fahrradgabel-Haltesystem dient zur Befestigung von Gepäckstücken, wie Gepäcktaschen, Trinkflaschen oder dergleichen. Bei der Fahrradgabel handelt es sich um eine herkömmliche Fahrradgabel, die eine mit einem Gabelschaft verbundene Gabelbrücke aufweist. Üblicherweise sind mit der Gabelbrücke zwei Gabelbeine, bzw. Gabelholme verbunden, wobei auch Fahrradgabeln mit nur einem Gabelbein bekannt sind. Mit dem mindestens einen Gabelbein ist eine Halteeinrichtung für Gepäckstücke verbindbar. Hierzu ist ein Verbindungselement vorgesehen, durch das eine formschlüssige Verbindung der Halteeinrichtung mit dem Gabelbein möglich ist. Durch eine derartige formschlüssige Verbindung ist die Position der Halteeinrichtung am Gabelbein definiert. Auch beim Befahren von unebenem Untergrund ist somit sichergestellt, dass die Halteeinrichtung und somit mit der Halteeinrichtung verbundene Gepäckstücke nicht verrutschen. Bei einer Fahrradgabel mit zwei Gabelbeinen können entsprechende Halteeinrichtungen an jedem Gabelbein vorgesehen sein.

Nachstehend wird die Erfindung anhand einer Halteeinrichtung beschrieben, die an einem Gabelbein vorgesehen ist.

Vorzugsweise ist die Halteeinrichtung derart ausgebildet, dass sie das Gabelbein zumindest teilweise manschettenartig umschließt. Ebenso kann die Halteeinrichtung mehrere manschettenartig ausgebildete Ansätze aufweisen, die das Gabelbein sodann in unterschiedlichen Höhen, bzw. unterschiedlichen Positionen, bezogen auf die Längsrichtung des Gabelbeins, zumindest teilweise umschließen. Besonders bevorzugt ist es, dass die Halteeinrichtung zumindest teilweise einen U-förmigen Querschnitt aufweist. In diesem Bereich ist es bevorzugt, dass die Halteeinrichtung das Gabelbein manschettenartig umschließt.

Zur Montage ist es somit bevorzugt, dass die Halteeinrichtung geringfügig aufgebogen wird, um sodann entsprechend einer Manschette über das Gabelbein geschoben zu werden. Insbesondere erfolgt ein Aufschieben der aufgebogenen manschettenartigen Halteeinrichtung auf eine in Fahrtrichtung weisende Vorderseite des Gabelbeins.

Zur Ausbildung des Verbindungselements, das eine formschlüssige Verbindung realisiert, ist es besonders bevorzugt, dass das Verbindungselement an der Halteeinrichtung oder dem Gabelbein einen Ansatz aufweist, der in eine Ausnehmung eingreift, die entsprechend an dem Gabelbein oder der Halteeinrichtung vorgesehen ist. In montiertem Zustand greift somit der Ansatz in die Ausnehmung, sodass eine formschlüssige Verbindung erfolgt. Zur Verbesserung der Verbindung können auch mehrere derartige Verbindungselemente vorgesehen sein, wobei beispielsweise ein Verbindungselement in einem oberen Bereich und ein weiteres Verbindungselement in einem unteren Bereich der Halteeinrichtung angeordnet ist. Bevorzugt ist es des Weiteren, dass der mindestens eine Ansatz einstückig mit der Halteeinrichtung bzw. dem Gabelbein verbunden ist.

Bevorzug ist es des Weiteren, dass der Ansatz oder die Ausnehmung an einer Innenseite des Gabelbeins vorgesehen ist. Die Innenseite des Gabelbeins ist hierbei diejenige Seite des Gabelbeins, die in Richtung des Vorderrades weist. Bei Gabeln mit zwei Gabelbeinen sind die Innenseiten, die aufeinander zuweisenden Seiten der beiden Gabelbeine.

Zur weiteren Fixierung der Halteeinrichtung ist es bevorzugt, dass die Halteeinrichtung mindestens ein Klemmelement aufweist. Das Klemmelement ist vorzugsweise derart ausgebildet, dass eine manschettenartig ausgebildete Halteeinrichtung durch das Klemmelement zusätzlich zu dem Verbindungselement klemmend am Gabelbein fixiert wird. Durch das Klemmelement wird die Halteeinrichtung somit vorzugsweise zusammengedrückt, sodass eine Innenseite der Halteeinrichtung gegen eine Außenseite des Gabelbeins gedrückt wird. Bei derartigen Klemmelementen kann es sich beispielsweise um Kabelbinder handeln, die sodann zum Lösen der Halteeinrichtung aufgeschnitten werden, sofern es sich um Einwegkabelbinder handelt. Bevorzugt ist es, dass das mindestens eine Klemmelement eine Schrauben-Mutter-Verbindung aufweist. Entsprechende Schrauben können in Öffnungen eingreifen, die an der Halteeinrichtung angeordnet sind. Insbesondere weist die Halteeinrichtung Laschen auf, in denen die Öffnungen ausgebildet sind. Die Schrauben können somit im montierten Zustand in Fahrtrichtung seitlich vor oder hinter dem Gabelbein angeordnet sein. Bevorzugt ist die Anordnung an einer in Fahrtrichtung weisenden Rückseite des Gabelbeins.

In bevorzugter Weiterbildung der Klemmelemente sind diese derart ausgebildet, dass die Klemmelemente zusätzlich zum Fixieren von Halterungen für das Gepäckstück oder zum unmittelbaren Fixieren des Gepäckstücks ausgebildet sind. Bevorzugt ist es, dass die Klemmelemente eine Doppelfunktion aufweisen, sodass einerseits ein zusätzliches klemmendes Fixieren der Halteeinrichtung am Gabelbein und ferner ein Befestigen von Halterungen für das Gepäckstück erfolgt. Hierdurch ist es möglich unterschiedliche Halterungen für unterschiedliche Gepäckstücke auf einfache Weise zu montieren.

Des Weiteren ist es bevorzugt, dass die Halteeinrichtung Faserverbundwerkstoff aufweist, insbesondere aus Faserverbundwerkstoff hergestellt ist, sodass die Halteeinrichtung ein geringes Gewicht aufweist.

Die vorstehend anhand eines Fahrradgabel-Haltesystems beschriebene Erfindung kann entsprechend auch an einer Sattelstrebe oder an einem anderen Fahrradrahmen-Bauteil ausgebildet sein.

Nachfolgend wird die Erfindung anhand einer bevorzugten Ausführungsform unter Bezugnahme auf die anliegenden Zeichnungen näher erläutert:
Es zeigen:
- Figur 1: eine schematische perspektivische Seitenansicht zweier Fahrradgabelbeine und
- Figur 2: eine schematische Schnittansicht entlang der Linie II-II in Figur 1.

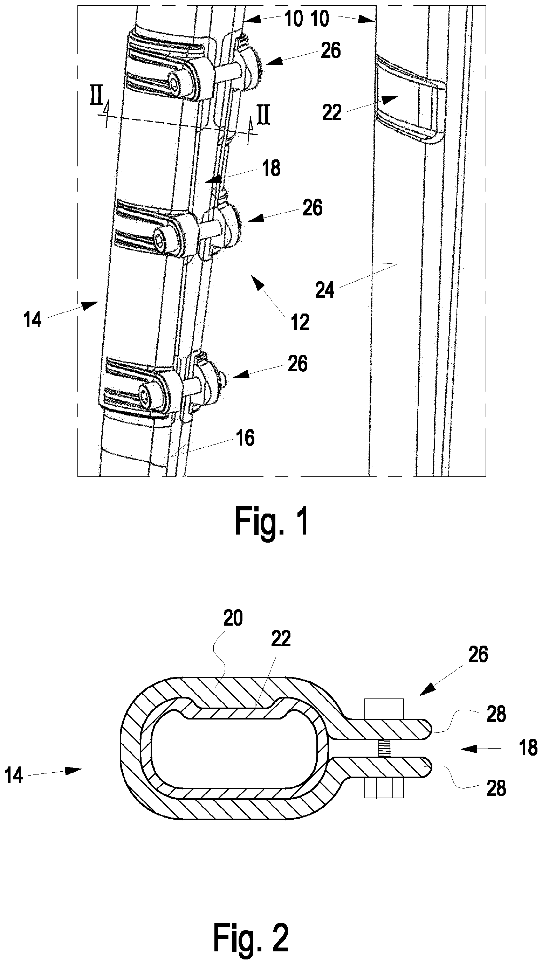

Figur 1 zeigt schematisch zwei Gabelbeine 10 einer nicht vollständig dargestellten Fahrradgabel. Die Gabelbeine 10 sind im oberen Bereich mit einer Gabelbrücke miteinander verbunden und die Gabelbrücke ist mit einem Gabelschaft verbunden ist. Im unteren Bereich, d.h. im Bereich der Ausfallenden der beiden Gabelbeine 10 weisen diese Aufnahmen für die Vorderradachse auf.

Das in Figur 1, sowie in Fahrtrichtung 12 linke Gabelbein 10 weist im dargestellten Ausführungsbeispiel eine Halteeinrichtung 14 auf. Eine entsprechende Halteinrichtung könnte auch am in Fahrtrichtung rechten Gabelbein angeordnet werden. Die Halteeinrichtung 14 ist manschettenartig ausgebildet und weist einen U-förmigen Querschnitt auf. An eine im montierten Zustand an der Rückseite 16 des Gabelbeins 10 angeordneten Seite weist die Halteeinrichtung einen sich über die gesamte Länge erstreckenden Schlitz 18 auf.

Insbesondere um ein Verrutschen der Halteeinrichtung 14 auf dem Gabelbein 10 zu vermeiden, weist die Halteeinrichtung 14 einen Ansatz 20 (Figur 2) auf. Der Ansatz 20 ragt in montiertem Zustand in eine Ausnehmung 22. Die Ausnehmung 22 ist an einer Innenseite 24 des Gabelbeins 10 angeordnet. Bei einer Möglichkeit an beiden Gabelbeinen 10 eine Halteeinrichtung 14 vorzusehen sind die beiden Ausnehmungen 22 somit einander gegenüberliegend angeordnet und weisen aufeinander zu. Der Ansatz 20 ist im dargestellten Ausführungsbeispiel mit der Halteeinrichtung 14 verbunden bzw. einstückig ausgebildet.

Zur weiteren Fixierung der Halteeinrichtung 14 am Gabelbein 10 sind im dargestellten Ausführungsbeispiel drei Klemmeinrichtungen 26 vorgesehen. Die drei Klemmeinrichtungen 26 sind als Schrauben-Mutter-Verbindung ausgebildet. Zur Verbindung mit der Halteeinrichtung 14 weist diese drei entgegen der Fahrtrichtung 12 weisende Laschenpaare 28 mit Durchgangsöffnungen zum Hindurchstecken der Schraube auf. Durch Zusammenziehen der Schrauben-Mutter-Verbindung 26 erfolgt neben der formschlüssigen Verbindung zwischen der Halteeinrichtung 14 und den Gabelbeinen 10 über das Verbindungselement 20, 22 eine klemmende Verbindung, sodass ein sicheres Fixieren der Halteeinrichtung 14 am Gabelbein 10 gewährleistet ist.

Mit einer oder mehreren Halteeinrichtungen 26 können ferner Halterungen für Gepäckstücke, Flaschen oder dergleichen, verbunden werden. Insofern haben die vorzugsweise als Schrauben ausgebildeten Klemmelemente 26 eine Doppelfunktion.

## Patentansprüche

1. Fahrradgabel-Haltesystem zur Befestigung von Gepäckstücken an einer Fahrradgabel, mit
einer Fahrradgabel mit mindestens einem Gabelbein (10),
einer mit dem Gabelbein (10) verbindbaren Halteeinrichtung (14) für Gepäckstücke und
einem Verbindungselement (20, 22) zum formschlüssigen Verbinden der Halteeinrichtung (14) mit dem Gabelbein (10).

2. Fahrradgabel-Haltesystem nach Anspruch 1, **dadurch gekennzeichnet, dass** die Halteeinrichtung (14) das Gabelbein (10) zumindest teilweise manschettenartig umschließt.

3. Fahrradgabel-Haltesystem nach Anspruch 1 oder 2, **dadurch gekennzeichnet, dass** die Halteeinrichtung (14) zumindest teilweise einen U-förmigen Querschnitt aufweist.

4. Fahrradgabel-Haltesystem nach Anspruch 1 bis 3, **dadurch gekennzeichnet, dass** das Verbindungselement einen mit der Halteeinrichtung (14) oder dem Gabelbein (10) verbundenen Ansatz (20) aufweist, der in ein am Gabelbein (10) oder an der Halteeinrichtung (14) vorgesehenen Ausnehmung (22) eingreift.

5. Fahrradgabel-Haltesystem nach Anspruch 4, **dadurch gekennzeichnet, dass** der Ansatz (20) mit der Halteeinrichtung (14) oder dem Gabelbein (10) einstückig ausgebildet ist.

6. Fahrradgabel-Haltesystem nach Anspruch 4 oder 5, **dadurch gekennzeichnet, dass** der Ansatz (20) oder die Ausnehmung (22) an einer Innenseite (24) des Gabelbeins (10) vorgesehen sind.

7. Fahrradgabel-Haltesystem nach Anspruch 1 bis 6, **dadurch gekennzeichnet, dass** die Halteeinrichtung (14) zum Fixieren am Gabelbein (10) mindestens ein Klemmelement (26) aufweist.

8. Fahrradgabel-Haltesystem nach Anspruch 7, **dadurch gekennzeichnet, dass** das mindestens eine Klemmelement (26) eine Schrauben-Mutter-Verbindung aufweist, die mit Öffnungen am Halteelement (14) zusammenwirken.

9. Fahrradgabel-Haltesystem nach Anspruch 7 oder 8, **dadurch gekennzeichnet, dass** das mindestens eine Klemmelement (26) an einer in Fahrtrichtung (12) weisenden Rückseite (16) des Gabelbeins (10) angeordnet ist.

10. Fahrradgabel-Haltesystem nach Anspruch 7 bis 9, **dadurch gekennzeichnet, dass** das mindestens eine Klemmelement (26) zusätzlich zum Fixieren des Gepäckstücks und/oder von Halterungen für das Gepäckstück ausgebildet ist.

11. Fahrradgabel-Haltesystem nach Anspruch 1 bis 10, **dadurch gekennzeichnet, dass** die Halteeinrichtung (14) Faserverbundwerkstoff aufweist, insbesondere aus Faserverbundwerkstoff hergestellt ist.
